# EUROPEAN PATENT SPECIFICATION

(11) **EP 1 552 765 B1**
(45) Date of publication and mention of the grant of the patent: **17.09.2008**
(21) Application number: 02774254.3
(22) Date of filing: 29.09.2002
(51) Int. Cl.: A46B 15/00

(54) **A MAGNETIC BRUSH FOR CLEANING THE WALL OF AN ARC AQUARIUM**
MAGNETISCHE BÜRSTE ZUR REINIGUNG DER WAND EINES BOGENAQUARIUMS
BROSSE MAGNETIQUE POUR NETTOYER LA PAROI D'UN AQUARIUM COURBE

(30) Priority: 18.09.2002 CN 02248137
(43) Date of publication of application: 13.07.2005
(73) Proprietor: Huang, Tong, Guangzhou City, Guangdong Province 510230 (CN)
(72) Inventor: Huang, Tong, Guangzhou City, Guangdong Province 510230 (CN)
(74) Representative: Gervasi, Gemma
(86) International application number: PCT/CN2002/000704
(87) International publication number: WO 2004/026078

(56) References cited:
- WO-A-00/40080
- CN-A- 1 302 182
- CN-Y- 2 219 047
- GB-A- 2 105 977
- US-B1- 6 206 978

## Description

### Technical field

The present invention relates to an apparatus for cleaning aquarium windows, in particular a magnetic brush for cleaning aquarium having curved window surface which makes use of magnetic force to produce attraction.

### Background of invention

China patent application No 00800767.5 or WO 0040080 discloses a device, which uses magnets to move the brush on plane aquarium windows thus cleaning the window surface. The interior element of such brush has an air chamber therein. After magnetic contact is broken, the interior element will float on the surface of water so that it can be readily removed. Anyway it must overcome considerable friction to make the movement of two attractive elements. As the thickness of the aquarium windows increases, the size of the magnetic material used inside the two elements increase accordingly. When the weight of said air chamber and the magnetic material is equal to the buoyancy, the interior element will suspend in water and move smoothly on the surface of the window upon the magnetic influence of the exterior element. On the other hand when the weight of said air chamber and the magnetic material is not equal to the buoyancy, say heavier than the buoyancy, the interior element will sink to the bottom of water after removal of magnetic force while when lighter than the buoyancy, the larger buoyancy makes the movement of the interior element more difficult as known from China patent application 00800767.5 or CN 22/9047 Y. Furthermore it asks for much stronger magnetic force to make the two elements attracted while cleaning is happening nearby the bottom of aquarium to overcome the detachment that affects the cleaning. Moreover, right angel shape of the bottom plate of the interior element makes it suitable only for cleaning the conventional rectangular aquarium and quite difficult to move on the curved window surface of aquarium which are available more and more on the market.

A magnetic brush with air chamber is disclosed in US6206978B1*.*

### Summary of the invention

The object of the present invention is to provide a suspensible magnetic brush, which is made capable of floating on water of the aquarium by means of weight adjusting so that the two attracted elements could move smoothly on the windows thus cleaning the aquarium.

Another object of the present invention is to provide a suspensible magnetic brush possible for cleaning both plane aquarium windows and for cleaning curved aquarium windows as well.

The above objects of present invention are carried out by a buoyancy suspensible magnetic brush for cleaning curved aquarium windows comprising an upper cover with an air chamber attached tightly to a bottom cover with cleaning material layer underneath, an inner cover with a magnet located in it being provided inside the air chamber , said inner cover being attached with the bottom cover while isolated from the air chamber, characterized in that said bottom cover has at least one convex edge, and said upper cover has at least one or two through holes for adjusting the air volume remained in the air chamber.

Said through holes, provided with sealing pad and knob therein, connect the inside of the air chamber with the outside.

Said from the air chamber isolated inner cover has magnet inside it. The magnet is placed in the concave part of the bottom cover while being pressed by an iron pad. A sponge pad is used to fix the magnet and the iron pad to the concave part between the inner cover and the bottom cover.

Said bottom cover has at least one convex edge, or all the edges could be convex. Cleaning material layer is provided at its lower surface. With its convex edge(s) the cleaning material can be adhered to the bottom cover's lower surface easily without the need for making material of specific size and shape (e.g., cleaning material with curved side surface) and is easy to replace.

With above solution, it is possible to adjust the air or liquid allowed to enter the air chamber through the holes connecting the upper cover and the air chamber so that the weight of the magnetic brush could be adjusted so as to balance all the forces exerted upon the interior magnetic brush. As a result the two attractive elements of the brush may move smoothly on the aquarium window so as to be possible for various sized aquarium. With the convex edge(s) of the bottom cover matching the curved window surface of the aquarium the magnetic brush can make a rapid cleaning movement. When the magnetic force between two attractive elements has been broken, the interior element will float to and on the surface of water so that can be readily removed.

While the weight of the interior magnetic element is adjusted so as that it is equal to buoyancy, the interior element will suspend in water. Thereafter an application of a smaller force to the exterior magnetic element will make the interior element readily move to the bottom of aquarium to clean the lower part or the bottom part. Moreover, with the interior element suspending in water it could temporally detached from the exterior brush when cleaning round certain obstacles, such as pumps, water plants, decoration and will be back to the influence of the exterior's magnetic force after leaving the obstacles to get attracted again, thus improving the cleaning efficiency. Present invention can be used for both plane window surfaces with bottom cover's plane surface and for curved window surface with bottom cover's convex edge(s) to clean the whole aquarium window.

### Brief description of the drawings

The present invention will now be explained in more detail in the way of embodiments in accordance with drawings.

Fig 1 shows schematically the sectional view of the first embodiment of present invention.

Fig 2 is the sectional view of fig 1 taken along A-A.

Fig 3 shows schematically the sectional view of the second embodiment of present invention.

Fig 4 shows the sectional view of fig 1 taken along A-A.

Fig 5 is the exploded vies of fig 4.

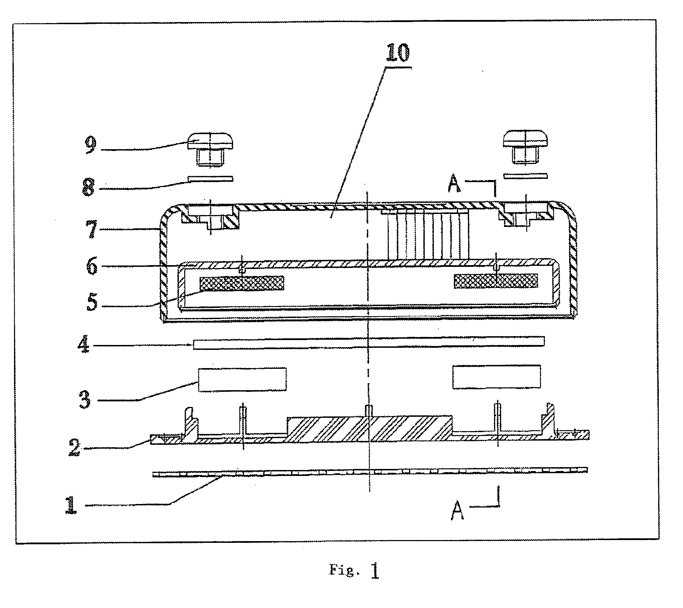

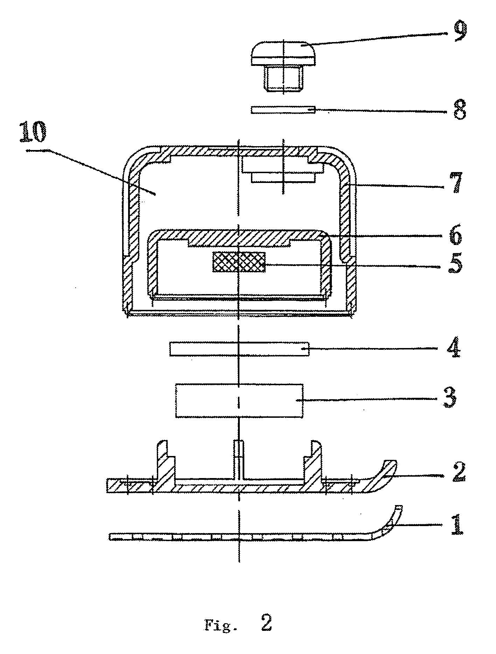

As shown in fig 1 and 2, the brush of present invention comprises an upper cover 7 having an air chamber 10 therein in which there is provided an inner cover 6 isolated from it. The inner cover 6 is fitted to the bottom cover 2. A magnet is provided inside the inner cover 6 and is placed in the convex part of the bottom cover 2 and pressed by an iron pad 4. A sponge pad 5, pressing the iron pad 4 and the magnet 3 downwardly to make them fixed to the bottom cover 2, is placed between the underneath of the inner cover 6 and the iron pad 4. The upper cover 7 has two through holes therein for connecting the inside and the outside of the air chamber 10, thus allowing air or liquid to enter it. A sealing pad 8 and a knob 9 are provided for the through holes to ensure sealing. The amount of air or liquid allowed to enter the air chamber 10 can be adjusted as needed, thus the weight of the magnetic brush can be controlled. Cleaning material layer 1, made of such as flocked fabric, fiber etc, is provided on the underneath of bottom cover 2 by means of magic stick or glue. The edges of said bottom cover 2 show a line of convex curve.

When used, it is needed to open the through holes on the upper cover 7 at first to allow such amount liquid get into the air chamber 10 that the weight of the interior element increases but can still suspend in water, and then the through holes are sealed with sealing pad 8 and knob 9. Thereafter, the element with the air chamber 10 is placed on the inner window of aquarium, while the exterior element with or without air chamber 10 is placed on the exterior window of aquarium. By the increased weight of the interior element counteracting most of the upward buoyancy, the forces exerted on the interior element reaches a balance. Thus, only very small force is needed to the exterior brush to manipulate the interior element moving easily on the inner window to the bottom of aquarium after two elements get attracted each other. The lower plane surface of the bottom cover 2 is capable of cleaning the plane surface of the aquarium, while the convex edge is capable of cleaning the curved surface. Said convex edge can be provided either on one of the four edges of the bottom cover 2 or otherwise on all the edges, making it 1-4 convex edges. After the attracting magnetic force has been eliminated the interior element will rise and float to the surface of water as its air chamber 10 has certain amount air within it, thus being capable of easy removal.

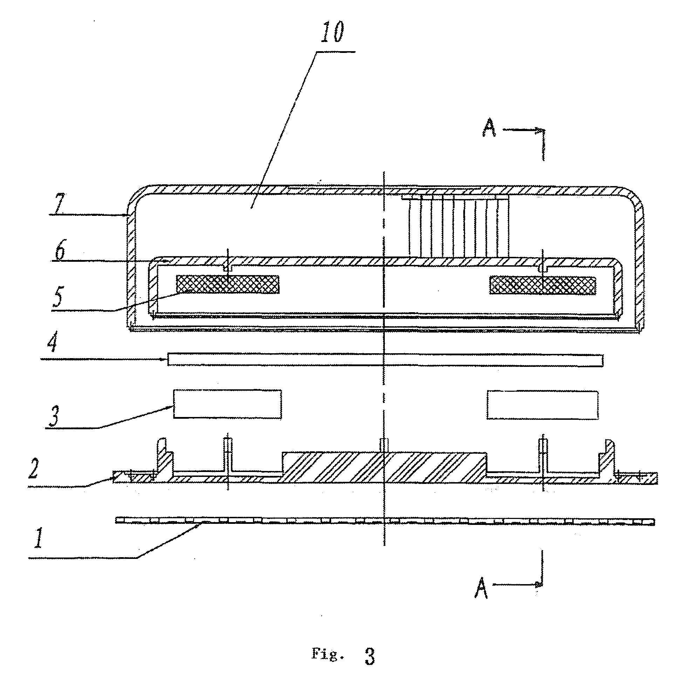

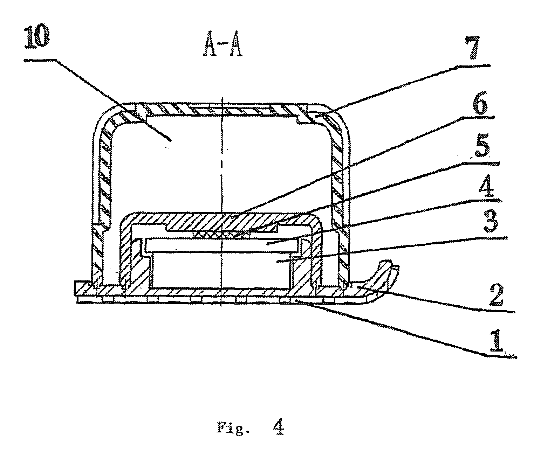

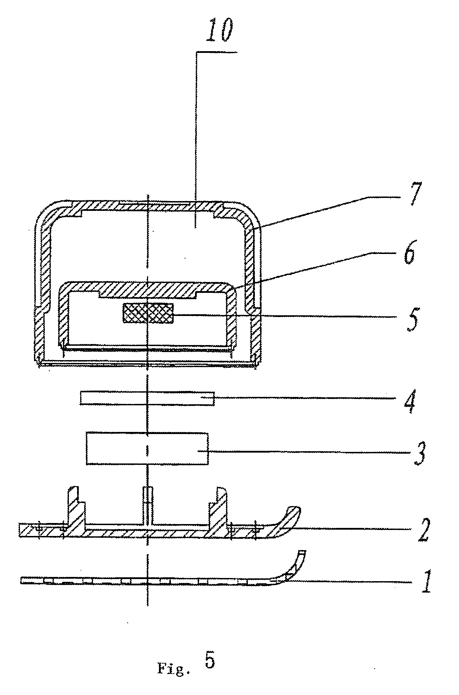

As shown in fig 3,4,5, the embodiment shown is similar to the above one except that there is no through hole connecting the air chamber 10 provided on the upper cover 7. Under this circumstance, the air chamber 10 is full of air.

When used, the element with the air chamber 10 is placed on the inner window of aquarium, while the other element is placed on the exterior window of aquarium, thus making them attract each other. By manipulating the exterior brush, the interior element will be made move along the curved window surface, thus cleaning the inner plane and curved window surface. After the magnetic force attracting each other is eliminated upon exterior brush being taken away, the interior element will rise and float to the surface of water or suspend in it, thus being capable of easy removal.

## Claims

1. A suspensible magnetic brush for cleaning aquarium with curved window surface, comprising an upper cover (7) with an air chamber (10), which upper cover (7) being attached tightly to a bottom cover (2) with a cleaning material layer(1) underneath, an inner cover (6) with a magnet (3) located in it being provided inside the air chamber (10), said inner cover (6) being attached with the bottom cover (2) while isolated from the air chamber (10), **characterized in that** , said bottom cover (2) has at least one convex edge, and said upper cover (7) has at least one or two through holes for adjusting the air volume remained in the air chamber 10).

2. A suspensible magnetic brush for cleaning aquarium with curved window surface according to claim 1, wherein said through holes connect the inside and outside of said air chamber (10), said through holes being provided with a sealing pad (8) and a knob (9).

3. A suspensible magnetic brush for cleaning aquarium with curved window surface according claim 1 or 2, wherein there is provided a magnet(3) inside the inner cover (6) isolated from the air chamber (10), said magnet (3)being placed in the concave part of the bottom cover (2) and being pressed by an iron pad (4), a sponge pad (5) being used to make the magnet (3) and the iron pad (4) fixed to the concave part between the inner cover (6) and the bottom cover (2).

4. A suspensible magnetic brush for cleaning aquarium with curved window surface according claim 1 or 2 or 3, wherein the cleaning material adhering to the lower surface of said bottom cover (2) is flocked fabric, fiber etc.

## Patentansprüche

1. Schweb- und schwimmfähige magnetische Bürste zur Reinigung von Aquarien mit gekrümmter Scheibenfläche, welche ein Gehäuseoberteil (7) mit einer Luftkammer(10) umfasst, wobei dieses Gehäuseoberteil (7) an ein Gehäuseunterteil (2) mit einem darunter angebrachten Reinigungsmaterialschicht (1) dicht angebracht ist, sowie ein inneres Gehäuseteil (6) mit einem darin befindlichen Magneten (3), welches sich im Innern der Luftkammer (10) befindet, wobei das genannte innere Gehäuseteil (6) mit dem Gehäuseunterteil (2) verbunden ist, während es von der Luftkammer (10) getrennt ist, **dadurch gekennzeichnet, dass** das genannte Gehäuseunterteil (2) mindestens eine konvexe Kante aufweist und das genannte Gehäuseoberteil (7) mindestens ein oder zwei durchgehende Löcher zur Einstellung des in der Luftkammer (10) verbliebenen Luftvolumens aufweist.

2. Schweb- und schwimmfähige magnetische Bürste zur Reinigung von Aquarien mit gekrümmter Scheibenfläche gemäß Anspruch 1, bei welcher die genannten durchgehenden Löcher, welche das Innere und das Äußere der genannten Luftkammer (10) verbinden, mit einer Abdichtscheibe (8) und einem Knopf (9) ausgestattet sind.

3. Schweb- und schwimmfähige magnetische Bürste zur Reinigung von Aquarien mit gekrümmter Scheibenfläche gemäß Anspruch 1 oder 2, bei welcher ein Magnet (3) im Innern des inneren Gehäuseteils (6), der von der Luftkammer (10) getrennt ist, vorhanden ist, wobei der genannte Magnet (3) im konkaven Teil des Gehäuseunterteils (2) untergebracht ist und durch ein Eisenblech (4) angedrückt wird, wobei eine Schwammscheibe (5) benutzt wird, um zu bewirken, dass der Magnet (3) und das Eisenblech (4) an dem konkaven Teil zwischen dem inneren Gehäuseteil (6) und dem Gehäuseunterteil (2) fest sitzen.

4. Schweb- und schwimmfähige magnetische Bürste zur Reinigung von Aquarien mit gekrümmter Scheibenfläche gemäß Anspruch 1, 2 oder 3, bei welcher das Reinigungsmaterial, das an der Unterseite des genannten Gehäuseunterteils (2) angebracht ist, Flockfasergewebe, Faserstoff usw. ist.

## Revendications

1. Brosse magnétique pouvant être suspendue servant au nettoyage d'un aquarium doté d'une surface vitrée courbe, comprenant un couvercle supérieur (7) avec une chambre à air (10), lequel couvercle supérieur (7) étant solidement fixé à un couvercle inférieur (2) avec une couche de matériau de nettoyage (1) en dessous, un couvercle intérieur (6) avec un aimant (3) situé dans celui-ci étant disposé à l'intérieur de la chambre à air (10), ledit couvercle intérieur (6) étant fixé avec le couvercle inférieur (2) tout en étant isolé de la chambre à air (10), **caractérisée en ce que** ledit couvercle inférieur (2) a au moins un bord convexe, et ledit couvercle supérieur (7) a au moins un ou deux trous traversants pour régler le volume d'air resté dans la chambre à air (10).

2. Brosse magnétique pouvant être suspendue servant au nettoyage d'un aquarium doté d'une surface vitrée courbe selon la revendication 1, dans laquelle lesdits trous traversants relient l'intérieur et l'extérieur de ladite chambre à air (10), lesdits trous traversants étant pourvus d'un joint d'étanchéité (8) et d'un bouton (9).

3. Brosse magnétique pouvant être suspendue servant au nettoyage d'un aquarium doté d'une surface vitrée courbe selon la revendication 1 ou 2, dans laquelle est prévu un aimant (3) à l'intérieur du couvercle intérieur (6) isolé de la chambre à air (10), ledit aimant (3) étant placé dans la partie concave du couvercle inférieur (2) et étant comprimé par une plaque de fer (4), une éponge (5) étant utilisée pour fixer l'aimant (3) et la plaque de fer (4) à la partie concave entre le couvercle intérieur (6) et le couvercle inférieur (2).

4. Brosse magnétique pouvant être suspendue servant au nettoyage d'un aquarium doté d'une surface vitrée courbe selon la revendication 1 ou 2 ou 3, dans laquelle le matériau de nettoyage adhérant à la surface inférieure dudit couvercle inférieur (2) est du tissu floqué, de la fibre, etc.
